(19) Europäisches Patentamt

European Patent Office

Office européen des brevets

(11) Publication number: **0 322 932 B1**

## (12) EUROPEAN PATENT SPECIFICATION

(45) Date of publication of patent specification: **30.03.94**   (51) Int. Cl.⁵: **C04B 38/00**, C04B 41/87

(21) Application number: **88201656.1**

(22) Date of filing: **01.08.88**

(54) A fiber filled reticulated ceramic, used as a lining in a furnace.

(30) Priority: **23.12.87 US 137192**

(43) Date of publication of application:
**05.07.89 Bulletin 89/27**

(45) Publication of the grant of the patent:
**30.03.94 Bulletin 94/13**

(84) Designated Contracting States:
**AT CH DE FR GB IT LI SE**

(56) References cited:
**WO-A-87/01610**     **DE-A- 554 987**
**FR-A- 2 250 722**     **GB-A- 2 126 497**
**GB-A- 2 166 758**     **US-A- 3 574 646**
**US-A- 4 448 833**

(73) Proprietor: **HI-TECH CERAMICS, INC.**
**6329 Route 21**
**Alfred Station New York 14803(US)**

(72) Inventor: **Morris, Jeffrey Rogers**
**R.D. 1**
**Scio New York 14880(US)**
Inventor: **Meinking, William Edwin**
**1706 Moland Road**
**Alfred Station New York 14803(US)**

(74) Representative: **Baarslag, Aldert D. et al**
**Nederlandsch Octrooibureau**
**Scheveningseweg 82**
**P.O. Box 29720**
**NL-2502 LS 's-Gravenhage (NL)**

EP 0 322 932 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

Reticulated ceramics, in others words, sintered ceramic foams comprise a solid phase that is interspersed in a continuous pore phase extending in all directions. The solid phase comprises relatively inert ceramic materials (high temperature resistant, inorganic materials, usually oxides, carbides etc.). Method of producing reticulated ceramics are disclosed in US Patent No. 4,568,595 and elsewhere. In US Patent No. 4,251,239, it is taught to provide, within the reticulated ceramic, a plurality of passages of a predetermined definable pattern and partially or completely filling the passages with fine filtered materials such as ceramic fibers.

US Patent No. 3,972,834 teaches a reticulated ceramic structure having fibers in the pores. The fibers carry a catalyst material and a fluid must pass through the fibers. Portions of the fibers are embedded or fixed in the webs which define the pores and other portions of the fibers extend into the pores to provide surfaces for carrying the material.

Reticulated ceramics may be used as insulating furnace linings.

The present invention relates to a method of lining at least a portion of a furnace comprising forming a dimensionally stable, self-supporting reticulated ceramic structure having a plurality of interconnected webs defining a plurality of interconnected pores, loading each of said pores with fibers to provide a loading of between 0.05 and 2.25 grams per cubic centimer ($3.26 \times 10^{-4}$ and $8.13 \times 10^{-2}$ pounds per cubic inch) of said fibers in the pores thereby forming a fiber filled reticulated ceramic structure, and arranging the fiber filled dimensionally stable reticulated ceramic structure as a lining for at least a portion of a furnace thereby providing a desired thermal conductivity.

One advantage of using fiber filled reticulated ceramics is that they can be easily tailored to have specific heat conductivities by altering the degree of fibre loading.

Impregnated fiber filled reticulated ceramics offer a new approach to fiber filled composites. The fibers, on one hand, and the continuous webs or struts of the reticulated ceramic, on the other hand, form two interwoven structures maintained relative to each other by the matrix of the impregnant. The fibers have superior tensile and thermal shock properties and the reticulated ceramic has better compressive properties.

Briefly, this invention provides a reticulated ceramic consisting of interconnected webs defining a plurality of interconnected pores and a plurality of fibers distributed within substantially all of said pores. Preferably, the reticulated ceramic and the fibers are oxide ceramics, carbides, nitrides, silicides, borides, carbon or mixtures thereof. The fibers may be deposited over substantially the entire surface of substantially all of said pores in a selected volume of said reticulated ceramic or the fibers may form a batt filling substantially all of said pores in a selected volume of the reticulated ceramic. In one specific embodiment, substantially all of said pores are filled. The fibers may be unattached or they may be chemically or ceramically bonded to each other, to the reticulated ceramic or to both. The fibers may be at least partially coated with equiaxed ceramic particles, especially where they are ceramically bonded.

Preferredly, the bulk density of the reticulated ceramic is between 3 and 50 percent and the bulk density of the fiber filled pores is between 1 and 50 percent. The apparent density of the fiber filled pores is typically between 0.05 and 2.25 grams per cubic centimeter ($3.26 \times 10^{-4}$ and $8,13 \times 10^{-2}$ pounds per cubic inch). Preferredly, the average effective diameter of the pores in the reticulated ceramic ranges from 10 microns to 2500 microns ($3.94 \times 10^{-4}$ inches to $9.84 \times 10^{-2}$ inches), the average length of the fibers ranges up to 10cm (3.94 inches) and the aspect ratio (width/length) of the fibers exceeds 10.

In embodiments in which the fibers simply coat the interior of the pores of the reticulated ceramic the fibers may have an average length of less than about 20 percent of the average effective diameter of the pores. In embodiments in which the fibers form a continuous matt throughout the pores the fibers may have an average length of at least 80 percent of the effective average diameter of the pores.

Preferably, the reticulated ceramic is an oxide ceramic comprised of lithium-alumino-silicates, alumino-silicates, aluminas, partially stabilized zirconias, fully stabilized zirconias, cordierites, mullites, and mixtures thereof or the reticulated ceramic is comprised of SiC, $Si_3N_4$ $B_4C$, AlN and sialons. More preferably, the fibers are glass fibers, alumina silicate fibers, high alumina fibers, zirconia fibers, non-oxide ceramic fibers, carbon fibers and mixtures thereof.

In a specific embodiment the fiber filled pores of the reticulated ceramic are impregnated with a solidifying liquid. The solidifying liquid may be an organic resin or thermosetting polymer, a chemically setting mortar or a molten metal.

A ceramic for use in the invention is generally created by the steps of a) forming a reticulated ceramic, b) forming a slurry of fibers, and c) flushing the slurry into the reticulated ceramic until the desired fiber loading is achieved. The flushing of the slurry into the reticulated ceramic may be assisted by pressurizing the slurry, pulling a vacuum upon the reticulated ceramic and/or vibrating the reticulated ceramic. The slurry of fibers may comprise 1 to 80 volume percent fibers dispersed in a liquid. The slurry may comprise equiaxed ceramic powder and fibers such that the fibers are at least partially coated with equiaxed ceramic particles. The term "equiaxed" means that the dimensions are approximately equal in all directions. In one embodiment, a further step comprises firing the fiber filled reticulated ceramic such that the fibers are ceramically bonded to the surface of the pores, to each other or both. In another embodiment, the slurry comprises, in addition to the fibers, a chemical binder such that the fibers are chemically bonded to the surface of the pores, to each other, or both. In a special embodiment, the method comprises a further step of impregnating the fiber filled pores with a solidifying liquid.

Specifically, a reticulated ceramic may be formed by immersing an open celled, porous, organic material (for example, urethane foam) in a slurry of finely divided ceramic powder having a binder therein. In this way, the walls of the porous material are coated. Excess slurry is removed. The coated material is then fired to burn out the organic material and immediately or thereafter fired to form a ceramic bond (sintered bond) between the finely divided ceramic particles. In this way, the internal structure of the porous material is replicated. See, for example, U.S. Patent No. 3,090,094 and British Patent No. 916,784. Table 1 sets forth the type of ceramic materials that may be used in the fabrication of a reticulated ceramic to be used in this invention and Table II sets forth specific chemistries of exemplary materials suitable for the practice of this invention.

TABLE I

| A. | Lithium alumino silicates (LAS, Beta-Spodumene, etc.) |
|----|-------------------------------------------------------|
| B. | Aluminia silicates (Mullite, etc.) |
| C. | Aluminas (92% $Al_2O_3$, 99.5% $Al_2O_3$, etc.) |
| D. | Partially stabalized zirconias (PSZ(Mg), PSZ(y), etc.) |
| E. | Fully stabalized zirconias (FSZ(Ca), FSZ(Ce), etc.) |
| F. | Non-Oxides (SiC, $Si_3N_4$, etc.) |
| G. | Cordierites |
| H. | Toughened ceramics (Zirconia toughened alumina (ZTA), Zirconia toughened mullite (ZTM), etc.) |

3

TABLE II

| | | | | |
|---|---|---|---|---|---|
| A. | LAS . . . . | Li$_2$O: 18.0%, | Al$_2$O$_3$: 13.0%, | SiO$_2$: 69% |
| B. | Mullite . . | Al$_2$O$_3$: 65.0%, | SiO$_2$: 35.0% | |
| C. | 92% Al$_2$O$_3$ . . | Al$_2$O$_3$: 92.0%, | SiO$_2$: 8.0% | |
| D. | 99.5% Al$_2$O$_3$. . | Al$_2$O$_3$: 99.5%, | SiO$_2$: 0.5% | |
| E. | PSZ(Mg) . . | ZrO$_2$: 97.0%, | MgO: 3.0% | |
| F. | FSZ(Ca) . . | ZrO$_2$: 94.5%, | CaO: 5.5% | |
| G. | ZTA . . | ZrO$_2$: 21.0%, | Al$_2$O$_3$: 79.0% | |
| H. | SiC . . | SiC: 90.0%, | Si: 10.0% | |

The average reticulate cell size to be infiltrated with the fibrous material will range between 10 and 2500 $\mu$m (3.94 x 10$^{-4}$ inches to 9.84 x 10$^{-2}$ inches). Fiber length will range between 5$\mu$m and 10cm (1.47 x 10$^{-4}$ inches and 3.94 inches). The desired fiber length is obtained by chopping (longer lengths) or by milling (shorter lengths). Chopping can be accomplished through the use of a device similar to a paper cutter or through the use of a high shear blender. Milling is carried out in any of the standard manners including wet or dry ball milling. Typically the longer the milling time the shorter the fiber length.

The fiber is dispersed in a liquid medium (water, alcohol, etc.) using a stir-type mixer. Surfactants (dispersing agents, wetting agents, and defoamers) are added to the fiber/liquid dispersion to stabilize the suspension. A binder such as polyvinyl alcohol may be added if additional green strength of the fiber/reticulated ceramic composite is desired.

The solids content of a typical dispersion is 3%, but could range from 1% to 80%. The preformed reticulated ceramic is backed by a porous medium with a pore size less than the fiber length being utilized. This acts to prevent the fibers from being flushed through the reticulate during infiltration. In the simplest

4

case, the fiber/liquid dispersion is poured through the reticulated ceramic allowing gravity and the porous medium to extract the liquid and to retain the fibers and thus fill the voids of the reticulated ceramic. The composite is then dried.

Variations on this procedure include drawing a vacuum on the back side of the reticulated ceramic to aid in the removal of the liquid and in creating a denser fiber packing arrangement. The fiber suspension can also be pumped through the reticulated ceramic and the pressure varied to achieve the final fiber packing density desired. Vibration may be applied to aid the fiber in moving through the reticulated ceramic for increased uniformity of the fiber distribution.

Table III sets forth the type of fibers that may be used according to the practice of this invention and Table IV sets forth specific chemistries for exemplary fibers suitable for the practice of this invention.

TABLE III

| A. | Glass fibers (Soda, Lime, Silica, etc.) |
| B. | Alumina silicate fibers ($xAl_2O_3 . x SiO_2$, etc.) |
| C. | High alumina fibers (silica bonded alumina, etc.) |
| D. | Zirconia fibers (FSZ(y), etc.) |
| E. | Non-oxide fibers (SiC, $Si_3N_4$, etc.) |
| F. | Carbon fibers |

## TABLE IV

| | | | |
|---|---|---|---|
| A. Glassy $Al_2O_3$-$SiO_2$-$B_2O_3$ | $Al_2O_3$: 62.0%, | $SiO_2$: 24.0%, | $B_2O_3$ 14% |
| B. Transition $Al_2O_3$ | $Al_2O_3$: 96.0%, | $SiO_2$: 4.0% | |
| C. $Al_2O_3$ | $Al_2O_3$: 99.5%, | $SiO_2$: 0.5% | |
| D. Silicon Carbide | SiC: 100.0% | | |
| E. Silicon Nitride | $Si_3N_4$: 100.0% | | |
| F. FSZ (y) | $ZrO_2$: 92.0%, | $Y_2O_3$: 8.0% | |
| G. Carbon | C: 100.0% | | |
| H. Alumina Silica | $Al_2O_3$: 58.0%, | $SiO_2$: 42.0% | |

Any combination of the above disclosed reticulated ceramics and fibers can be employed to tailor the final desired properties of the fiber filled reticulate ceramic composite for use as a furnace lining. Preferential fiber placement (surface vs. interior of the pores of the reticulated ceramic) is accomplished by choosing a fiber length which approaches the reticulate cell size. Thus, during infiltration, the fiber blinds the surface of the reticulate preventing additional fiber from penetrating the interior regions. Fiber lengths larger than the cell size are employed to form a mat within and on the surface of the reticulate.

Infiltration may be carried out in the unfired or fired state of the reticulated ceramic. In addition, the ceramic/fiber composite may have a surface coating applied to rigidize the structure. This improves the resistance to erosion by high velocity gases associated with, but not limited to, gas fired furnaces. See U.S. Patent No. 4,568,595.

Equiaxed particulate or ceramic precursor additions may also be made to the fiber suspension. This addition aids in the bonding to the fibrous regions. The ceramic/fiber composite may be fired to bond the fiber, react any additives, remove organic binders and expel any volatiles. Composites constructed in the unfired state are fired to consolidate the structure thereby producing denser reticulated ceramic/fiber materials.

The unit density and porosity of a reticulated ceramic structure refers to the material in bulk form as opposed to the density and porosity of the material which comprises the bulk form. In general, when referring to the bulk properties of reticulated ceramics, the unit density or mass/volume ($g/cm^3$ or $lb/in^3$) is reported as some percentage of the theoretical density. The theoretical density is that property of the ceramic as if it were a solid mass with no void space. The unit porosity or void space of the reticulated structure is also given by a percentage.

For this invention, reticulated ceramics with unit densities of 3% to 50% of theoretical density and unit porosities of 50% to 97% void space would be applicable.

Specific Example

Following the procedures outlined above, a fiber filled reticulated ceramic was prepared to have the properties described in the following Table V.

TABLE V

| | |
|---|---|
| Reticulate size | 9" x 9" x 1/2" |
| Reticulate chemistry | 92% $Al_2O_3$:8% $SiO_2$ |
| Reticulate unit density | 15% |
| Reticulate unit porosity | 85% |
| Reticulate cell size | 1500 $\mu$m mean |
| Fiber chemistry | Alumina silicate |
| Fiber length | 250 $\mu$m |
| Infiltration method | Gravity |
| Fiber packing density | 0.72g/$cm^3$ |

The fiber filled reticulated ceramic described above is used in the method of lining a furnace heated to temperatures up to 1550° C. The reticulated ceramic is self-supporting. Therefore, it can be used on walls and ceilings of the furnace which are exposed to the interior. Moreover, the fiber filled reticulated ceramic has sufficient strength and abrasion resistance to be used on the floor of the furnace which supports the workpieces within the furnace. The fiber filled reticulated ceramic combines the insulation value and thermal shock resistance of fibrous materials with the mechanical advantages of monolithic ceramic shapes. Thus it is particularly suitable as for use as a furnace lining.

**Claims**

1. A method of lining at least a portion of a furnace comprising forming a dimensionally stable, self-supporting reticulated ceramic structure having a plurality of interconnected webs defining a plurality of interconnected pores, loading each of said pores with fibers to provide a loading of between 0.05 and 2.25 grams per cubic centimeter of said fibers in said pores thereby forming a fiber filled reticulated ceramic structure, and arranging said fiber filled dimensionally stable reticulated ceramic structure as a lining for said portion of said furnace thereby providing the desired thermal conductivity.

2. A method according to claim 1 wherein said reticulated ceramic structure and said fibers are selected from the group consisting of oxides, ceramics, carbides, nitrides, silicides, borides, carbon and mixtures thereof.

3. A method according to claim 1 wherein said fibers are at least partially coated with equiaxed ceramic particles.

4. A method according to claim 1 wherein said fibers are ceramically bonded to the surface of said webs defining said pores.

5. A method according to claim 4 wherein said fibers are ceramically bonded to each other and to said surface of said webs defining said pores.

6. A method according to claim 1 wherein said fibers are chemically bonded to the surface of said webs defining said pores.

7. A method according to claim 6 wherein said fibers are chemically bonded to each other and said surface of said webs defining said pores.

8. A method according to claim 1 wherein the bulk density of said reticulated ceramic is between 3 and 50 percent of theoretical density.

9. A method according to claim 1 wherein the bulk density of said fiber-filled pores is between 1 and 50 percent.

10. A method according to claim 1 wherein the average effective diameter of said pores in said reticulated ceramic structure ranges from 10 micrometer to 2500 micrometer and the average length of said fibers ranges up to 10 cm.

11. A method according to claim 1 wherein said fibers have an average length of at least 80 percent of the effective average diameter of said pores.

12. A method according to claim 1 wherein said reticulated ceramic structure is an oxide selected from the group consisting of lithium-alumino-silicates, alumino-silicates, aluminas, partially stabilized zirconias, fully stabilized zirconias, cordierites, mullites, and mixtures thereof.

13. A method according to claim 11 wherein said reticulated ceramic structure is selected from the group consisting of SiC, $Si_3N_4$, $B_4C$, A1N and sialons.

14. A method according to claim 11 wherein said fibers are selected from the group consisting of alumino-silicate fibers, high alumina fibers, zirconia fibers, non-oxide ceramic fibers, carbon fibers and mixtures thereof.

## Patentansprüche

1. Verfahren zur Auskleidung wenigstens eines Teils eines Ofens, umfassend Bilden einer dimensionsstabilen, selbsttragenden netzartigen keramischen Struktur, die eine Vielzahl von miteinander verbundenen Netzwerken aufweist, die eine Vielzahl von miteinander in Verbindung stehenden Poren festlegt, Beladen einer jeden der genannten Poren mit Fasern, um in den genannten Poren eine Last zwischen 0,05 und 2,25 $g/cm^3$ der genannten Fasern bereitzustellen, wobei eine fasergefüllte netzartige keramische Struktur gebildet wird, und Anordnen der genannten fasergefüllten dimensionsstabilen netzartigen keramischen Struktur als Auskleidung für den genannten Teil des genannten Ofens, wobei die gewünschte thermische Leitfähigkeit bereitgestellt wird.

2. Verfahren nach Anspruch 1, bei dem die genannte netzartige keramische Struktur und die genannten Fasern aus der Gruppe ausgewählt werden, bestehend aus Oxiden, keramischem Materialien, Carbiden, Nitriden, Siliciden, Boriden, Kohlenstoff und Gemischen davon.

3. Verfahren nach Anspruch 1, bei dem die genannten Fasern wenigstens teilweise mit gleichachsigen keramischen Teilchen überzogen werden.

**4.** Verfahren nach Anspruch 1, bei dem die genannten Fasern keramisch an die Oberfläche der genannten Netzwerke, die die genannten Poren definieren, gebunden werden.

**5.** Verfahren nach Anspruch 4, bei dem die genannten Fasern keramisch aneinander und an die genannte Oberfläche der genannten Netzwerke, die die genannten Poren definieren, gebunden werden.

**6.** Verfahren nach Anspruch 1, bei dem die genannten Fasern chemisch an die genannte Oberfläche der genannten Netzwerke, die die genannten Poren definieren, gebunden werden.

**7.** Verfahren nach Anspruch 6, bei dem die genannten Fasern chemisch aneinander und an der genannten Oberfläche der genannten Netzwerke, die die genannten Poren definieren, gebunden werden.

**8.** Verfahren nach Anspruch 1, bei dem die Schüttdichte des genannten netzartigen keramischen Materials zwischen 3 und 50 % der theoretischen Dichte beträgt.

**9.** Verfahren nach Anspruch 1, bei dem die Schüttdichte der genannten fasergefüllten Poren zwischen 1 und 50 % beträgt.

**10.** Verfahren nach Anspruch 1, bei dem der durchschnittliche effektive Durchmesser der genannten Poren in der genannten netzartigen keramischen Struktur im Bereich von 10 $\mu$m bis 2500 $\mu$m und die durchschnittliche Länge der genannten Fasern im Bereich bis zu 10 cm liegt.

**11.** Verfahren nach Anspruch 1, bei dem die genannten Fasern eine durchschnittliche Länge von wenigstens 80 % des effektiven durchschnittlichen Durchmessers der genannten Poren aufweisen.

**12.** Verfahren nach Anspruch 1, bei dem die genannte netzartige keramische Struktur ein Oxid darstellt, ausgewählt aus der Gruppe, bestehend aus Lithiumaluminiumsilicaten, Aluminiumsilicaten, Aluminiumoxiden, teilweise stabilisierten Zirconoxiden, vollständig stabilisierten Zirconoxiden, Cordieriten, Mulliten und Gemischen davon.

**13.** Verfahren nach Anspruch 11, bei dem die genannte netzartige keramische Struktur ausgewählt wird aus der Gruppe, bestehend aus SiC, $Si_3N_4$, $B_4C$, AlN und Sialonen.

**14.** Verfahren nach Anspruch 11, bei dem die genannten Fasern ausgewählt werden aus der Gruppe, bestehend aus Aluminiumsilicatfasern, hochaluminiumoxidhaltigen Fasern, Zirconoxidfasern, nichtoxidischen keramischen Fasern, Kohlenstoffasern und Gemischen davon.

**Revendications**

**1.** Procédé de revêtement d'au moins une portion d'un four, comportant :

la formation d'une structure céramique réticulée autoportante à dimensions stables, ayant une pluralité de bandes interconnectées définissant une pluralité de pores interconnectés,

le chargement de chacun de ces pores avec des fibres de façon à obtenir une charge comprise entre 0,05 et 2,25 g/cm$^3$ desdites fibres dans lesdits pores et ainsi la formation d'une structure céramique réticulée chargée de fibres, et

l'application de ladite structure céramique réticulée à dimensions stables, chargée de fibres, en tant que revêtement de ladite portion dudit four et le fait de procurer ainsi la conductivité thermique désirée.

**2.** Procédé selon la revendication 1, dans lequel ladite structure céramique réticulée et lesdites fibres sont choisies dans le groupe constitué par les oxydes, les céramiques, les carbures, les nitrures, les siliciures, les borures, le carbone et leurs mélanges.

**3.** Procédé selon la revendication 1, dans lequel lesdites fibres sont au moins partiellement recouvertes de particules de céramique équiaxes.

**4.** Procédé selon la revendication 1, dans lequel lesdites fibres sont fixées par liaison céramique à la surface desdits fils définissant lesdits pores.

**5.** Procédé selon la revendication 4, dans lequel lesdites fibres sont fixées par liaison céramique les unes aux autres et à ladite surface desdites fibres définissant lesdits pores.

**6.** Procédé selon la revendication 1, dans lequel lesdites fibres sont fixées par liaison chimique à la surface desdits fils définissant lesdits pores.

**7.** Procédé selon la revendication 6, dans lequel lesdites fibres sont fixées par liaison chimique les unes aux autres et à ladite surface desdits fils définissant lesdits pores.

**8.** Procédé selon la revendication 1, dans lequel la densité en vrac de ladite céramique réticulée est comprise entre 3 et 50% de la densité théorique.

**9.** Procédé selon la revendication 1, dans lequel la densité en vrac desdits pores remplis de fibres est comprise entre 1 et 50%.

**10.** Procédé selon la revendication 1, dans lequel le diamètre effectif moyen desdits pores dans ladite structure céramique réticulée, vaut entre 10 micromètres et 2500 micromètres et la longueur moyenne desdites fibres vaut jusqu'a 10 cm.

**11.** Procédé selon la revendication 1, dans lequel la longueur moyenne desdites fibres vaut au moins 80% du diamètre moyen effectif desdits pores.

**12.** Procédé selon la revendication 1, dans lequel ladite structure céramique réticulée est un oxyde choisi dans le groupe constitué par les lithio-alumino-silicates, les alumino-silicates, les alumines, les zircones partiellement stabilisées, les zircones totalement stabilisées, les cordiérites, les mullites, et leurs mélanges.

**13.** Procédé selon la revendication 11, dans lequel ladite structure céramique réticulée est choisie dans le groupe formé par SiC, $Si_3N_4$, $B_4C$, AlN et les sialons.

**14.** Procédé selon la revendication 11, dans lequel lesdites fibres sont choisies dans le groupe formé par les fibres d'alumino-silicate, les fibres à haute teneur en alumine, les fibres de zircone, les fibres de céramique non-oxydes, les fibres de carbone et leurs mélanges.